# EUROPÄISCHE PATENTANMELDUNG

(11) **EP 0 680 136 A1**
(43) Veröffentlichungstag der Anmeldung: **02.11.1995**
(21) Anmeldenummer: 95101109.7
(22) Anmeldetag: 27.01.1995
(51) Int. Cl.: H02P 1/58, D01H 1/32

(54) **Sanftanlauf der Antriebsmotoren einer Rotorspinnmaschine**

(30) Priorität: 29.04.1994 DE 4414984
(71) Anmelder: Rieter Ingolstadt Spinnereimaschinenbau Aktiengesellschaft, 85046 Ingolstadt (DE)
(72) Erfinder: Herzner, Erwin, D-85111 Möckenlohe (DE); Götz, Josef, D-85095 Denkendorf (DE)

(57) **Zusammenfassung**

Die Erfindung betrifft den Sanftanlauf der Antriebsmotoren einer Rotorspinnmaschine. Bei einer Rotorspinnmaschine werden für den Antrieb Asynchronmotoren eingesetzt. Jeder der Asynchronmotoren absolviert den Hochlauf mit Hilfe einer Anlaufsteuerung.

Aufgabe der Erfindung ist es die Wirtschaftlichkeit des Sanftanlaufs aller leistungsstarken Asynchronmotoren einer Rotorspinnmaschine weiter zu verbessern.

Ein Merkmal der Erfindung ist, daß mit nur einer einzelnen Sanftanlaufsteuerung (SAS) alle Asynchronmotoren (M1 bis M5) der Rotorspinnmaschine gesteuert anlaufen.

## Beschreibung

Die Erfindung betrifft den Sanftanlauf aller leistungsstarken Antriebsmotoren, die als Asynchronmotoren an einer Rotorspinnmaschine eingesetzt sind. Bei der Rotorspinnmaschine werden für den Antrieb Asynchronmotoren eingesetzt. Die installierte elektrische Leistung des Antriebs ist relativ hoch im Vergleich zu Maschinen anderer Spinnverfahren, da die Trägheitsmassen für den einzelnen Antriebsmotor vergleichsweise sehr hoch sind.

An der Rotorspinnmaschine werden leistungsstarke Asynchronmotoren eingesetzt für den Antrieb der Arbeitsorgane Rotoren und Auflösewalzen. Die Arbeitsorgane Rotoren und Auflösewalzen werden dabei für je eine Maschinenseite von einem separaten Asynchronmotor angetrieben.
Der Motor für die Hauptabsaugung ist ebenfalls ein leistungsstarker Asynchronmotor. Diese leistungsstarken Asynchronmotoren erbringen einen sehr großen Anteil der gesamten installierten elektrische Leistung der Rotorspinnmaschine. Der Einsatz von Asynchronmotoren hat sich an Rotorspinnmaschinen durchgesetzt, da sie wartungsarm, kostengünstig und wirtschaftlich sind. Beim Anlauf unter Last erzeugen diese Asynchronmotoren hohe Drehmomentspitzen, die das Nenndrehmoment wesentlich übersteigen. Dieses Betriebsverhalten hat zur Folge, daß Antriebswelle und Kupplung sehr stark mechanisch beansprucht werden. Kraftübertragungsglieder wie Riemen oder Arbeitsorgane wie Rotoren und Auflösewalzen werden mechanisch sehr stark belastet.

Nachteilig beim Anlauf leistungsstarker Asynchronmotoren ist auch der entstehende hohe Anlaufstrom. Der verursacht eine Erwärmung der Wicklungen des Motors und somit kommt es zu einer Beanspruchung der elektrischen Spannungsfestigkeit. Die hohen Stromspitzen beim Anlauf der Rotorspinnmaschine belasten andererseits auch das zugehörige elektrische Versorgungsnetz.

Aus diesen Gründen wurden Asynchronmotoren eingesetzt, die aufgrund der erforderlichen Beschleunigung der Trägheitsmassen der Spinnmaschine überdimensioniert waren oder mit einer Anlaufhilfe ausgerüstet sind. Als Anlaufhilfen sind bekannt die Stern/Dreieck-Schaltung, Anlaßtransformatoren, Rutschkupplungen oder elektronische Sanftanlaufsteuerungen. Elektronische Sanftanlaufsteuerungen haben sich durchgesetzt und werden üblicherweise bei einer Antriebsleistung eines Asynchronmotors von über 15 kW eingesetzt. Das kennzeichnet einen leistungsstarken Asynchronmotor. Das Steuerungsprinzip einer Sanftanlaufsteuerung ist die Phasenanschnittsteuerung der Halbleiter. Bei bekannten Rotorspinnmaschinen ist für jeden der Asynchronmotoren zum Antrieb der Rotoren, der Auflösewalzen und der Hauptabsaugung eine separate Anlaufsteuerung eingesetzt. Das bedeutet einen hohen Aufwand dieser Anlaufhilfe.

Aufgabe der Erfindung ist es, die Wirtschaftlichkeit des Sanftanlaufs aller leistungsstarken Asynchronmotoren einer Rotorspinnmaschine weiter zu verbessern.

Ein Merkmal der Erfindung ist, daß mit nur einer einzelnen SanftanlaufSteuerung eines Asynchronmotors andere Asynchronmotoren der Rotorspinnmaschine gesteuert anlaufen. Nach einer ausgewählten Hierarchie werden mit einer einzelnen Anlaufsteuerung der Asynchronmotor für die Hauptabsaugung, den Rotorantrieb und den Auflösewalzenantrieb gesteuert angelaufen. Die Hochlaufzeit eines Asynchronmotors bis zum Erreichen der Betriebsdrehzahl ist abhängig von der Last. Bei der Rotorspinnmaschine sind dies die entsprechenden Trägheitsmassen der Arbeitsorgane. Das ist eine bekannte Größe. Ist die Hochlaufzeit für den ersten Asynchronmotor beendet, so wird die Sanftanlaufsteuerung umgeschalten zur AnSteuerung des Anlaufs des nächsten Motors. Wenn dessen Hochlaufzeit beendet ist, wird wiederum die Sanftanlaufsteuerung zur Steuerung des Anlaufs des nächsten Motors umgeschalten. Auf diese Art und Weise erfolgt nacheinander der Anlauf aller Asynchronmotoren einer Rotorspinnmaschine. Die Sanftanlaufsteuerung ist für den leistungsstärksten Asynchronmotor dimensioniert. Die AnlaufSteuerung wird gesteuert durch eine Schrittfortschaltung, die zeitabhängig arbeitet und somit die Hochlaufzeit repräsentiert.

Die Erfindung reduziert auf vorteilhafte Weise den apparativen Aufwand für den Sanftanlauf einer Rotorspinnmaschine und garantiert dennoch eine Vermeidung der nach dem Stand der Technik genannten Nachteile.

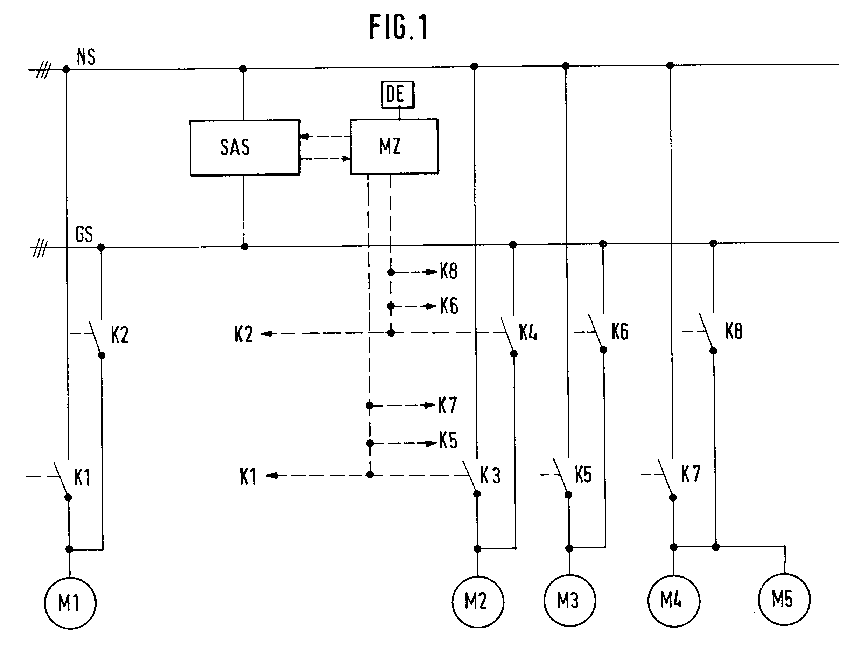

Die Merkmale der Erfindung und deren vorteilhafte Ausgestaltung werden nachfolgend an einem Ausführungsbeispiel erläutert. Dabei zeigt
- Figur 1: prinzipieller Stromlaufplan zum Sanftanlauf der Antriebsmotoren einer Rotorspinnmaschien.

Der Antrieb einer Rotorspinnmaschine erfolgt im wesentlichen über fünf leistungsstarke Antriebsmotoren. Es handelt sich um Asynchronmotoren M1, M2, M3, M4, M5. Die Hauptabsaugung wird angetrieben durch den Asynchronmotor M1. Die Rotoren sind auf beiden Seiten der Rotorspinnmaschine angeordnet. Der Antrieb erfolgt deshalb für jede Seite getrennt. Der Asynchronmotor M2 übernimmt vom Endgestell aus den Rotorantrieb für eine Seite. Für die andere Seite der Maschine übernimmt der Asynchronmotor M3 vom Triebgestell aus den Rotorantrieb. Der Antrieb der Auflösewalzen ist ähnlich gestaltet. Ausgehend vom Endgestell übernimmt der Asynchronmotor M4 den Antrieb der Auflösewalzen für eine Maschinenseite. Für die andere Maschinenseite übernimmt vom Triebgestell aus der Asynchronmotor M5 den Antrieb der Auflösewalzen. Diese Motoren erbringen zusammen eine installierte Leistung von ca. 80 bis 100 kW, wobei ein Motor für den Rotorantrieb mit ca. 30 kW die größte Einzelposition hat.

Der Stromlaufplan nach Figur 1 zeigt eine einpolige Darstellung, obwohl es sich im vorliegenden Fall um ein Drehstromnetz handelt.

Wie Figur 1 zeigt, kann jeder der Asynchronmotoren M1 bis M5 mit Netzspannung NS oder mit einer Grundspannung GS beliefert werden, vorausgesetzt die entsprechenden Schütze K1 bis K8 richtig geschlossen sind. Zwischen der Ebene der Netzspannung und der Ebene der Grundspannung ist eine Sanftanlaufsteuerung SAS angeordnet. Diese Sanftansteuerung SAS und die zugehörigen Schütze werden über die Maschinenzentrale MZ angesteuert. Die Steuerstromverbindungen sind als Strichlinien gekennzeichnet. Die durchgehenden Linien kennzeichnen den elektrischen Leistungsfluß.

Figur 1 zeigt, daß lediglich ein einzelnes Sanftanlaufgerät SAS zur Steuerung des Sanfanlaufs aller Asynchronmotoren M1 bis M5 verwendet wird. Hilfsschütze sind in Figur 1 aus Gründen der Einfachheit nicht dargestellt.

Die Sanftanlaufsteuerung SAS liefert auf den ausgangsseitigen Strang eine Grundspannung GS, die geringer ist als die Netzspannung NS. Die Sanftanlaufsteuerung SAS wird durch Halbleiter gesteuert. Innerhalb einer eingestellten Zeit wird die Grundspannung GS kontinuierlich auf Netzspannung NS gesteigert. Durch den entsprechenden Momentanwert der Spannung am Motor wird erreicht, daß die Stromaufnahme und letztlich das Drehmoment begrenzt werden können.

Ein Maschinenbediener betätigt den Startknopf der Dateneingabe DE. Dieser Befehl geht an die Maschinenzentrale MZ. Das ist das Signal für den Beginn des Sanftanlaufs der Rotorspinnmaschine. Mit Betätigung des Startknopfes der Dateneingabe DE, steuert die Maschinenzentrale MZ einen nicht dargestellten Hilfsschütz, der die SAS startet.
Die Maschinenzentrale MZ steuert den Schütz K2 an. Wenn Schütz K2 geschlossen ist, wird der Asynchronmotor M1 für die Hauptabsaugung mit dieser Grundspannung GS versorgt. Der Asynchronmotor M1 erhält die Grundspannung GS für eine Hochlaufzeit, die von der Sanftanlaufsteuerung SAS vorgegeben und überwacht wird. Die Dauer der Hochlaufzeit wird aus den elektrischen Parametern des Motors ermittelt. Mit Beendigung der Hochlaufzeit, was durch die Sanftanlaufsteuerung SAS erkannt und an die Maschinenzentrale MZ weitergegeben wird, wird zugleich über die Maschinenzentrale MZ der Schütz K1 geschlossen, der Schütz K2 geöffnet. Dieser Vorgang kann etwa 5 Sekunden dauern. Damit wird erreicht, daß nunmehr der Asynchronmotor M1 direkt über Netzspannung NS versorgt wird. Jetzt steuert die Maschinenzentrale MZ den Schütz K4 und die Sanftanlaufsteuerung SAS an, dann beginnt der Sanftanlauf des Asynchronmotors M2. Die Sanftanlaufsteuerung SAS ist für den höchsten Anlaufstrom dimensioniert, den einer der vorhandenen Asynchronmotoren M1 bis M5 liefert.

Ist die Hochlaufzeit für den Asynchronmotor M2 beendet, so wird durch die Sanftanlaufsteuerung SAS erkannt, daß die Grundspannung GS die Größe der Netzspannung NS erreicht hat und über einen nicht dargestellten Hilfsschütz wird der Schütz K3 geschlossen, Schütz K4 geöffnet. Nach diesem Zeitablauf wird Schütz K6 geschlossen. Es beginnt der Sanftanlauf für den Asynchronmotor M3, der vom Triebgestell aus die Rotoren einer Maschinenseite antreibt. Mit Beendigung des Sanftanlaufes wird der Schütz K5 geschlossen, der Schütz K6 geöffnet. Nach diesem Zeitablauf wird der Schütz K8 geschlossen.
Es laufen die Asynchronmotoren M4 und M5 zusammen hoch. Das ist möglich, da ihre gemeinsame elektrische Leistung unter der elektrischen Leistung des stärksten, einzelnen Antriebes liegt. Der Sanftanlauf wird analog zu den vorherigen Vorgängen durchgeführt, d.h. Schütz K8 öffnet, Schütz K7 schließt.

Die Maschinenzentrale MZ beinhaltet ein Programm zur Schrittfortschaltung, so daß die Arbeitsweise der Sanftanlaufsteuerung SAS nach Beendigung einer Hochlaufzeit erneut aktiviert wird, bis die letzten Asynchronmotoren hochgelaufen sind. Dieser Hochlauf aller Asynchronmotoren kann nach einer Gesamtzeit von ca. 2 Min. beendet sein. Alle Asynchronmotoren einer Rotorspinnmaschine haben somit den Sanftanlauf mit nur einer Sanftanlaufsteuerung SAS absolviert. Ein Wanderautomat an der Rotorspinnmaschine kann jetzt mit dem Anspinnen beginnen.

## Patentansprüche

1. Sanftanlauf der Antriebsmotoren einer Rotorspinnmaschine, wobei Arbeitsorgane an der Rotorspinnmaschine von Asynchronmotoren angetrieben werden und diese Asynchronmotoren unter Last der Trägheitsmassen der Arbeitsorgane vom Stillstand bis auf Betriebsdrehzahlen hochlaufen und Sanftanlaufsteuerungen für die Asynchronmotoren eingesetzt sind, dadurch gekennzeichnet, daß mit nur einer Sanftanlaufsteuerung (SAS) alle Asynchronmotoren (M1 bis M5) der Rotorspinnmaschine gesteuert anlaufen.

2. Sanftanlauf nach Anspruch 1, dadurch gekennzeichnet, daß die SanftanlaufSteuerung (SAS) von einer Maschinenzentrale (MZ) nach einer Hochlaufzeit eines Asynchronmotors auf den nächsten Asynchronmotor fortgeschalten wird.

3. Sanftanlauf nach Anspruch 1, dadurch gekennzeichnet, daß die Sanftanlaufsteuerung (SAS) für den Anlaufstrom des leistungsstärksten Asynchronmotors dimensioniert ist.
